# EUROPÄISCHE PATENTANMELDUNG

(11) **EP 4 070 920 A1**
(43) Veröffentlichungstag der Anmeldung: **12.10.2022**
(21) Anmeldenummer: 21167400.7
(22) Anmeldetag: 08.04.2021
(51) Int. Cl.: B25J 9/16

(54) **AUTONOMES MOBILES ROBOTERSYSTEM UND VERFAHREN ZUM BETRIEB**

(71) Anmelder: Siemens Aktiengesellschaft, 80333 München (DE)
(72) Erfinder: Arzich, Martin, 90475 Nürnberg (DE); Graf, Rene, 90513 Zirndorf (DE)

(57) **Zusammenfassung**

Um bei einem autonomen mobilen Robotersystem (AMR) die Sicherheit bei einem Agieren mit einem Produktionsmodul (400) und/oder einem Produkt (500) zu erhöhen, wird vorgeschlagen, ein erstes Sensorsystem (1) und ein zweites Sensorsystem (2) diversitär zueinander auszulegen und mit einer Sicherheitseinrichtung (1oo2) erste Lokalisierungsdaten (P1) und zweite Lokalisierungsdaten (P2) in einem Vergleichsmittel (3) zu vergleichen und eine Plausibilitätsprüfung der Lokalisierungsdaten (P1,P2) durchzuführen, weiterhin wird bei vorliegender Gleichheit und Plausibilität ein Freigabesignal (OK) bereitgestellt und bei einer Abweichung der Lokalisierungsdaten (P1,P2) voneinander bzw. einem nicht plausiblen Prüfergebnis wird ein erstes Sicherheitssignal (S1) erzeugt.

## Beschreibung

Die Erfindung betrifft ein autonomes mobiles Robotersystem mit Mitteln zum selbstständigen Anfahren an einen Ankopplungsbereich eines Produktionsmoduls und Mitteln zum Agieren mit dem Produktionsmodul und/oder einem Produkt, mit einer Überwachungseinheit ausgestaltet in einem ersten Überwachungsmodus ein um das Robotersystem zumindest teilweise aufgespanntes erstes Überwachungsfeld auf ein Eindringen eines Objektes zu überwachen, mit einem ersten Sensorsystem zur Erfassung von ersten Sensordaten, einem zweiten Sensorsystem zur Erfassung von zweiten Sensordaten, mit einer ersten Auswerteeinheit ausgestaltet aus den ersten Sensordaten erste Lokalisierungsdaten zu ermitteln, mit einer zweiten Auswerteeinheit ausgestaltet aus den zweiten Sensordaten zweite Lokalisierungsdaten zu ermitteln.

Produktionsmodule können verschiedenste mechanische, elektromechanische oder elektronische Einrichtungen sein, die zur Behandlung, Bewegung, Verarbeitung und/oder Bearbeitung eines Gegenstands, Werkstücks, einer Flüssigkeit oder vergleichbaren Produkten, Baugruppen oder Materialien eingerichtet und ausgebildet sind. Produktionsmodule können beispielsweise Werkzeugmodule, Werkmaschinen (z.B. zum Fräsen, Bohren, Stanzen, Pressen, o.ä.) oder ähnliche Werkzeuge, Geräte oder Maschinen oder auch Elemente davon sein. Weiterhin können Produktionsmodule auch zum zumindest u.a. Transport von Produkten, Baugruppen oder Materialien ausgebildet und eingerichtet sein, beispielsweise als Förderband, Kran, Roboterarm, Pumpe oder Ähnliches. Weiterhin können Produktionsmodule auch zur Lagerung oder Zufuhr entsprechender Produkte ausgebildet und eingerichtet sein (z.B. umfassend ein Regalsystem, Tank, o.ä.). Das Produktionsmodul kann auch beispielsweise zum Erhitzen oder auch sonstigen Bearbeiten von Werkstücken, Baugruppen und/oder festen, flüssigen oder gasförmigen Materialien ausgebildet und eingerichtet sein, z.B. als Ofen, Kessel, Ventil, Rührer, o.Ä..

Das Produktionsmodul selbst kann wiederum aus mehreren Teilen, Baugruppen und/oder Unter-Modulen aufgebaut sein und/oder beispielsweise eine oder mehrere mechanische und/oder elektronische Untereinheiten aufweisen.

Insbesondere kann das Produktionsmodul als ein sogenanntes "Cyber-Physical-Systems" (CPS) oder ein Teil davon ausgebildet und eingerichtet sein. So kann das Produktionsmodul beispielsweise als ein sogenanntes "Cyber-Physical-Module" (CPM) oder ein "Cyber-Physical-Production-Module" (CPPM) ausgebildet und eingerichtet sein.

In modernen Produktionsanlagen wird das klassische Fließband immer öfter durch mobile Transportmittel ersetzt, die als FTS (Fahrerloses Transport System) oder englisch AGV (Automated Guided Vehicle) bezeichnet werden. Diese Fahrzeuge bewegen sich meist entlang vorgegebener Bahnen, die durch farbige Markierungen auf dem Boden oder in den Boden eingelassene induktive oder kapazitive Spurführungen gelenkt werden. Moderne Fahrzeuge können auch sensorgestützt navigieren, so dass die Bahnen quasi nur virtuell vorliegen und die Fahrzeuge sich mittels verschiedener Sensoren in der Umgebung orientieren. Diese frei navigierenden Fahrzeuge, die im Gegensatz zu den spurgeführten auch dynamisch um Hindernisse herumfahren können, nennt man AMR (Autonomer Mobiler Roboter).

Ein bevorzugtes Sensorsystem für AGV oder AMR sind Laserscanner, die mittels Laufzeitmessung, seltener auch mittels Phasenverschiebung, eines Laserstrahls die Umgebung vermessen. Der Laserstrahl wird über einen rotierenden Spiegel gedreht, so dass ein großer Erfassungsbereich entsteht, typischerweise 180 oder sogar 270 Grad. Die Laserscanner werden in erster Linie als Sicherheitseinrichtung verwendet, da sie intern fehlersicher aufgebaut sind. Für diesen Zweck werden dem Scanner definierte Felder mitgegeben, die er auf Verletzung überwacht und dies per fehlersicherem Ausgangssignal oder fehlersicherer Kommunikation einer überlagerten, ebenfalls fehlersicheren Steuerung mitteilt.

Neben der Verwendung an mobilen Fahrzeugen werden die Laserscanner auch an stationären Maschinen eingesetzt, um fehlersicher zu erkennen, dass beispielsweise ein Mensch sich genähert hat, und um die Maschine dementsprechend zur Gefährdungsvermeidung ganz oder teilweise abzuschalten. Die Laserscanner können somit ähnlich wie Lichtvorhänge oder Lichtgitter mechanische Absperrungen mit fehlersicheren Türkontakten ersetzen.

Bei einer Verletzung eines Sicherheitsbereiches des Laserscanners durch eine an der Maschine vorbeilaufende Person wird die Maschine nur verlangsamt, ohne dass es zu einem Produktionsstopp kommen muss.

In der zu Beginn erwähnten modernen Produktionsanlage kommen oftmals beide Verwendungen zusammen, sprich die Maschinen erkennen per Laserscanner die Annäherung eines Menschen und die AMRs liefern Material oder das Produktionsgut an die Maschinen an. Ob spurgeführt oder frei navigierend spielt für die weitere Betrachtung dabei keine Rolle.

Bislang löst ein AMR genauso wie ein Mensch die Sicherheitseinrichtung einer anderen, insbesondere stationären Maschine, insbesondere einen Laserscanner und/oder Lichtvorhang, aus und diese verlangsamt damit den Bewegungsablauf oder schaltet komplett ab. Soll beispielsweise ein Werkstück bearbeitet werden, ohne dass dieses von dem AMR in die Maschine umgeladen wird, entsteht eine Blockade, da die Maschine aufgrund der Verletzung der Sicherheitseinrichtung nicht arbeiten kann, wenn das AMR vor oder in ihr steht.

Derzeit werden daher unter anderem Maschine verwendet, die keine berührungslosen Sicherheitseinrichtungen wie Laserscanner oder Lichtgitter aufweisen, sondern mechanische wie Zäune oder Tore, die für die Ein- und Ausfahrt des AGV geöffnet, aber während der Bearbeitung durch die Maschine geschlossen sein müssen. Dabei muss mittels anderer zusätzlicher Sensorik oder Maßnahmen sichergestellt werden, dass kein Mensch parallel zum AMR die Maschine betreten hat oder betreten kann. Dies ist aufwändig und insbesondere schwer zu realisieren, da der Mensch zertifiziert fehlersicher als Störobjekt erkannt werden muss.

Ferner werden bislang Bearbeitungsschritte so ausgeführt, dass ein Werkstück vom AMR in die Maschine umgeladen wird, so dass das AMR sich wieder aus dem Erfassungsbereich der Laserscanner der Maschinen entfernen kann. Dies erfordert aber zum einen die entsprechende Mechanik in der Maschine und verlängert zum anderen die Produktionszeit, da die Maschine während des Umladens stillstehen muss. Ebenso muss je nach mechanischer Ausführung auch hier gewährleistet sein, dass kein Mensch zusammen mit dem AMR die Maschine betritt, aber im Gegensatz zu diesem nicht wieder verlässt. Es ist eine Aufgabe der vorliegenden Erfindung die oben genannten Nachteile und insbesondere die oben genannte Blockade zu vermeiden.

Die Aufgabe wird dadurch gelöst, dass das erste Sensorsystem und das zweite Sensorsystem diversitär zueinander ausgelegt sind und eine Sicherheitseinrichtung vorhanden ist, welche ausgestaltet ist, die ersten Lokalisierungsdaten und die zweiten Lokalisierungsdaten in einem Vergleichsmittel zu vergleichen und eine Plausibilitätsprüfung der Lokalisierungsdaten durchzuführen, und weiterhin ausgestaltet, bei Vorliegen der Gleichheit und Plausibilität ein Freigabesignal bereitzustellen und bei einer Abweichung der Lokalisierungsdaten voneinander bzw. einem nicht plausiblen Prüfergebnis ein erstes Sicherheitssignal zu erzeugen.

Relevant ist die fehlersichere Ermittlung der Pose der Autonomen Robotereinheit. Erst nach Feststellung einer fehlersicheren Pose ist der Betrieb eines Roboterarmes auf beispielsweise einer mobilen Plattform oder/und eine Interaktion mit einer anderen Anlage möglich.

Letzten Endes ermöglicht das sicherheitsgerichtete Signal eine Vielzahl von Freigabemöglichkeiten für andere Applikationen. Auch von Vorteil ist, dass keine Änderungen in der Umgebung bzw. der Umwelt vorgenommen werden müssen, wie z.B. Orientierungshelfer, QR-Codes, usw. aufgestellt werden müssen. Dadurch ergibt sich eine fast unbegrenzte Anzahl an möglichen fehlersicheren Posen, die ein AMR annehmen kann.

Durch das quasi-kontinuierliche Spektrum an fehlersicheren Posen sind somit fehlersichere Pfade definierbar, auf denen ein AMR entlangfahren kann. Bei einer vollflächigen Aufzeichnung des Bodens ist auch eine vollflächige fehlersichere Lokalisierung möglich. Ist das AGV/AMR gerade mit einer Maschine oder sonstigen Einrichtung gekoppelt, kann es somit ohne Unterbrechung des fehlersicheren Gesamtzustandes von AGV und Maschine seine Position ändern, falls dies zur Bearbeitung des Werkstückes notwendig ist.

Da keine Änderung der Umwelt (Schilder, Merken, Barken) vorgenommen werden müssen, wird eine Inbetriebnahmephase bei safetyrelevanten Applikationen mit AMR deutlich beschleunigt und erleichtert sowie die Flexibilität der Pose deutlich erhöht.

Außerdem wird durch eine fehlersichere Pose die Kopplung zu anderen Maschinenteilen und die Nutzung systemübergreifender Sicherheitsfunktionen ermöglicht.

Des Weiteren ermöglicht die Bestimmung der fehlersicheren Pose eines AMRs die Umsetzung von technischen Schutzmaßnahmen und somit letztendlich die Konformität mit den aktuellen Normen. Die Konformitätserklärung eines Anlagenbetreibers ist dabei Grundvoraussetzung für den Einsatz einer Maschine, wie z.B. eines AGVs in Verbindung mit einem Roboter, in der Produktion. Die Möglichkeiten für den flexiblen Einsatz von mobilen Maschinen in Produktionsabläufen werden somit erheblich gesteigert, sodass die Produktivität der gesamten Anlage erhöht wird.

Auch kann eine Kontrolleinheit vorhanden sein, welche ausgestaltet ist, bei Vorliegen des ersten Sicherheitssignals die Mittel zum selbstständigen Anlernen und Agieren in ihren Funktionen einzuschränken oder abzuschalten, wobei eine erste Kopplungsüberwachungseinheit vorhanden ist, in welcher Standortdaten des Ankopplungsbereiches hinterlegt sind, wobei die Ankopplungsüberwachungseinheit weiterhin dazu ausgestaltet ist, zu prüfen, ob die Lokalisierungsdaten mit den Standortdaten des Ankopplungsbereiches übereinstimmt und bei Übereinstimmung mittels einer Fallumschalteeinheit von dem ersten Überwachungsmodus in einen zweiten Überwachungsmodus zu schalten, wobei die Überwachungseinheit ausgestaltet ist, in dem zweiten Überwachungsmodus ein zweites Überwachungsfeld zu überwachen, welches einen Sicherheitsbereich des Produktionsmoduls mit einschließt.

Auch als Vorteil für dieses autonome mobile Robotersystem wird die Zusammenführung zweier voneinander unabhängiger Sensorsysteme bzw. Sensorprinzipien zur Bestimmung einer Pose angesehen, ohne dabei die Umwelt dafür zu verändern. Das hier aufgezeigte Robotersystem erlaubt in der Anwendung auf eine konkrete Anlage die Erreichung eines Performancelevels (PLd) oder Safety Intergraty Level (SIL2) durch einen geeigneten strukturellen Aufbau unter Verwendung geeigneter Hardware, damit die fehlersichere Pose z.B. für Applikationen mit Robotern verwendet werden kann.

Im Sinne der Erfindung ist nach der DIN EN ISO 8373 (Industrieroboter Wörterbuch) die Pose eine Kombination von einer Position und Orientierung im dreidimensionalen Raum. Die Position einer punktförmigen Masse in Relation zu einem kartesischen Koordinatensystem definiert sich demnach die Abstände entlang den Koordinatenrichtungen X,Y,Z. Spannt man an diesen Masterpunkt ein zweites kartesisches Koordinatensystem auf, so definiert sich die Orientierung dieses Koordinatenkreuzes durch den Winkelversatz zu einer Koordinatenachse in Bezug zu den entsprechenden Achsen des Basiskoordinatensystems. Es sind somit zusätzlich drei Winkel notwendig, die die Lage des neuen Koordinatensystems bezogen auf das Basiskoordinatensystem beschreiben.

In einer vorteilhaften Ausgestaltung des Robotersystems ist die Sicherheitseinrichtung als eine auf funktionale Sicherheit ausgelegte Steuerung ausgestaltet, welche über einen ersten Kommunikationsweg mit der ersten Auswerteeinheit und über einen zweiten Kommunikationsweg mit der zweiten Auswerteeinheit verbunden ist, wobei die Kommunikationswege diversitär zueinander ausgestaltet sind.

Zur Erreichung des genannten Safety Integrety Level wird hier vorteilhafter Weise eine Sicherheitseinrichtung eingesetzt, welche nach einer Struktur (One out of Two) aufgebaut ist. Jedes der beiden Sensorsysteme stellt beispielsweise einer fehlersicheren speicherprogrammierbaren Steuerung seine Lokalisierungsdaten durch unterschiedliche Kommunikationswege zur Verfügung. Auf der fehlersicheren speicherprogrammierbaren Steuerung werden dann beide Signale miteinander z.B. durch Kreuzvergleich verglichen. Als unterschiedliche Sensoren kann z.B. einmal eine Kamera und einmal ein Lasersystem verwendet werden. Als Auswerteeinheit könnten zum einen eine Bodenlokalisierungseinheit (Jetson TX2) und zum anderen eine Navigationssoftware (ANS+) verwendet werden. Diese beiden Auswerteeinheiten könnten dann noch zusätzlich über diversitäre Wege, zum einen über einen Shared Memory Bereich und zum anderen über ein User Defined Protocol Ethernet Interface an die Sicherheitseinrichtung ihre Daten weitergeben.

Das Robotersystem ist weiterhin ausgestaltet, mit seiner Überwachungseinheit ein Eindringen des Objektes in das erste Überwachungsfeld entweder mit Hilfe der ersten Sensordaten des ersten Sensorsystems oder mit einem der Überwachungseinheit zugeordneten Objekterkennungsmittel zu erfassen.

Weiterhin weist das Robotersystem eine erste Kommunikationseinheit auf, ausgestaltet eine fehlersichere Kommunikationsverbindung mit einer zweiten Kommunikationseinheit des Produktionsmoduls aufzubauen, wobei weiterhin zumindest die erste Kommunikationseinheit ausgestaltet ist, zuvor eine funktional sichere eindeutige Verbindungsidentifizierung mit der zweiten Kommunikationseinheit durchzuführen und bei einer erfolgreichen Identifizierung die Kommunikation aufrecht zu erhalten und ein zweites Sicherheitssignal zu erzeugen, welches die fehlersichere Kommunikationsverbindung bestätigt, wobei die Überwachungseinheit weiterhin ausgestaltet ist, die Überwachung des Sicherheitsbereichs des Produktionsmoduls bei Vorliegen des zweiten Sicherheitssignals zu übernehmen.

Durch die Übernahme der Sicherheitsüberwachung für das Produktionsmodul durch das Robotersystem ergibt sich ein enormes Einsparpotential für die Betreiber solcher industriellen Anlagen, da sie bei Verwendung der fehlersicheren Steuerung innerhalb des Robotersystems und der damit erreichten fehlersicheren Ermittlung der Pose anhand der ermittelten Lokalisierungsdaten eine Menge an kostenintensiven Sicherheitssensoriken für das Produktionsmodul einsparen können, ohne dass das Sicherheitsniveau der gesamten Anlage bzw. der Wechselwirkung zwischen dem Robotersystem und dem Produktionsmodul darunter leidet.

Weiterhin ist es von Vorteil, wenn die Sicherheitseinrichtung in eine auf funktionale Sicherheit ausgelegte Steuerungs-Softwareumgebung eingebettet ist, welche wiederum innerhalb eines Wirtsbetriebssystem auf einer Rechnereinheit ablauffähig ist. Die Rechnereinheit könnte ein frei programmierbarer Open Controller sein und vorteilhafter Weise läuft die Steuerungs-Softwareumgebung darauf ab. Dabei werden die ersten Lokalisierungsdaten über eine Shared Memory Schnittstelle und die zweiten Lokalisierungsdaten über ein User Defined Protocol über eine Ethernet Schnittstelle in der Softwareumgebung empfangen.

Weiterhin weist das Robotersystem eine Geschwindigkeitsregeleinheit auf, welche ausgestaltet ist, die aktuellen Lokalisierungsdaten mit den Ortsbeschreibungsdaten eines vorgebbaren Bereichs und/oder eines vorgebbaren Korridors entlang einer geplanten Route zu vergleichen und für den Fall, dass der Vergleich ergibt, dass der Bereich oder der Korridor verlassen wurde, die Geschwindigkeit zu reduzieren.

Durch eine permanente fehlersichere Lokalisierung kann eine Umschaltung der Geschwindigkeit eines AMR abhängig von der aktuellen Pose bzw. dem Aufenthalt in einem Bereich folgen. Beispielsweise könnte die Geschwindigkeit in einen von Menschen stark frequentierten Bereich verringert werden und in einem für Menschen nicht zugänglichen Bereich stark erhöht werden.

Denkbar wäre auch ein Parallelbetrieb von einem Kommissionier-Roboter und einem Menschen, denn durch eine permanente fehlersichere Lokalisierung kann sichergestellt werden, dass der Roboter immer in einen Bereich agiert, in welchen er den Menschen nicht gefährdet.

Weiterhin wird die eingangs genannte Aufgabe durch ein Verfahren zum Betrieb eines autonomen mobilen Robotersystems nach den Merkmalen des Anspruchs 8 gelöst.

Zur sicheren Interaktion zwischen dem Robotersystem und einem Produktionsmodul kann weiterhin in einen Ankopplungsbereich oder Wechselwirkungsbereich folgendes durchgeführt werden. In einem ersten Überwachungsmodus wird ein um das Robotersystem zumindest teilweise aufgespanntes erstes Überwachungsfeld auf ein Eindringen eines Objektes überwacht, wobei mit einem ersten Sensorsystem erste Sensordaten mit einem zweiten Sensorsystem zweite Sensordaten erfasst werden, wobei aus den ersten Sensordaten mittels einer ersten Auswerteeinheit erste Lokalisierungsdaten und aus den zweiten Sensordaten mittels einer zweiten Auswerteeinheit zweite Lokalisierungsdaten generiert werden. Das erste Sensorsystem und das zweite Sensorsystem werden dabei diversitär zueinander betrieben und mittels einer Sicherheitseinrichtung werden die ersten Lokalisierungsdaten und die zweiten Lokalisierungsdaten in einem Vergleichsmittel verglichen und auf Plausibilität geprüft, wobei bei Vorliegen der Gleichheit und Plausibilität ein Freigabesignal bereitgestellt wird und bei einer Abweichung der Lokalisierungsdaten voneinander bzw. einen nicht plausiblen Prüfergebnis wird ein erstes Sicherheitssignal erzeugt, wobei mittels einer Kontrolleinheit bei Vorliegen des ersten Sicherheitssignals der Betrieb und/oder die Interkation eingeschränkt oder abgeschaltet wird, wobei mittels einer Kopplungsüberwachungseinheit geprüft wird, ob die Lokalisierungsdaten mit Standortdaten des Ankopplungsbereiches oder des Wechselwirkungsbereiches übereinstimmen und bei Übereinstimmung wird mittels einer Fallumschalteeinheit von dem ersten Überwachungsmodus in einen zweiten Überwachungsmodus geschaltet, in welchem ein zweites Überwachungsfeld überwacht wird, welches einen Sicherheitsbereich des Produktionsmoduls mit einschließt.

In einen weiteren Verfahrensschritt wird die Sicherheitseinrichtung als eine auf funktionale Sicherheit ausgelegte Steuerung betrieben, wobei über einen ersten Kommunikationsweg mit der ersten Auswerteeinheit und über einen zweiten Kommunikationsweg mit der zweiten Auswerteeinheit kommuniziert wird, wobei die Kommunikationswege diversitär betrieben werden.

Verfahrensgemäß kann das Eindringen des Objektes in das erste Überwachungsfeld entweder mit Hilfe der ersten Sensordaten des ersten Sensorsystems oder mit separaten Objekterkennungsmitteln verfasst werden.

Weiterhin wird die Sicherheit erhöht, wenn das Robotersystem über eine erste Kommunikationseinheit eine fehlersichere Kommunikationsverbindung mit einer zweiten Kommunikationseinheit des Produktionsmoduls aufbaut, wobei zuvor eine funktional sichere eindeutige Verbindungsidentifizierung zwischen den Kommunikationseinheiten durchgeführt wird und bei einer erfolgreichen Identifizierung die Kommunikation aufrechtgehalten und ein zweites Sicherheitssignal erzeugt wird, welches die fehlersicheren Kommunikationsverbindungen bestätigt, wobei daraufhin die Überwachungseinheit die Überwachung des Sicherheitsbereiches des Produktionsmoduls bei Vorliegen des zweiten Sicherheitssignals übernimmt.

Eine funktional sichere Kommunikation und Verbindungsidentifizierung wird beispielsweise mittels PROFIsafe realisiert.

Die Systembeschreibung "PROFIsafe Systembeschreibung, Technologie und Anwendung", Version November 2010, Bestell-Nr. 4.3.4.1, Herausgeber PROFIBUS Nutzerorganisation e.V. (PNO) beschreibt die Realisierung einer sicherheitsgerichteten Kommunikation und insbesondere einer sicheren Verbindungsidentifizierung bei PROFIBUS und PROFINET Protokollen.

Anhand der Zeichnung wird ein Ausführungsbeispiel aufgezeigt, es zeigt
- FIG 1: ein autonomes mobiles Robotersystem in Annäherung an ein Produktionsmodul,
- FIG 2: das automobile Robotersystem in einen angekoppelten Zustand an ein Produktionsmodul mit einer aufgebauten sicheren Kommunikationsverbindung,
- FIG 3: eine schematische Darstellung eines Aufbaus einer Sicherheitseinrichtung zur Erreichung eines SIL-Levels,
- FIG 4: ein automobiles Robotersystem in Interaktion mit einem Regallager und
- FIG 5: eine Fertigungszelle bzw. eine Fertigungszelle mit eingefahrenem Robotersystem.

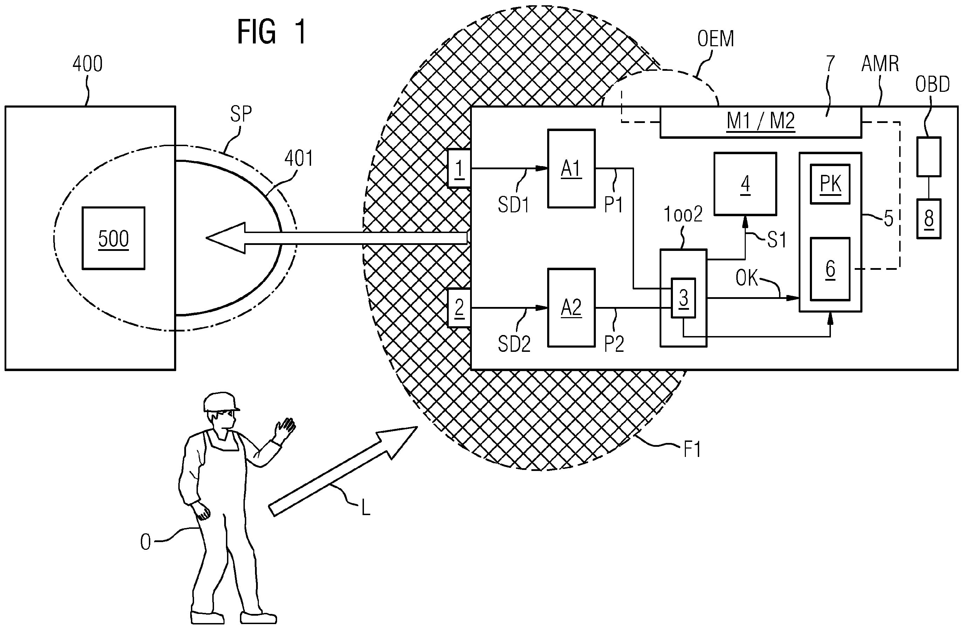

Gemäß FIG 1 ist ein autonomes mobiles Robotersystem AMR mit Mitteln zum selbstständigen Anfahren an einen Ankopplungsbereich 401 eines Produktionsmoduls 400 dargestellt. Das Robotersystem AMR weist zusätzlich Mittel zum Agieren mit dem Produktionsmodul 400 und/oder mit einem Produkt 500 auf. Das Robotersystem AMR ist mit einer Überwachungseinheit 7 ausgestaltet. In einem ersten Überwachungsmodus M1 wird ein um das Robotersystem AMR zumindest teilweise aufgespanntes erstes Überwachungsfeld F1 auf ein Eindringen eines Objektes O überwacht. Das Objekt O ist in dem Fall von FIG 1 ein Mensch, welcher sich in einer Laufrichtung L auf das Robotersystem AMR zubewegt. Sollte der Mensch in das Überwachungsfeld F1 eindringen, so wird eine die Sicherheit gewährleistende Funktion ausgeführt.

Weiterhin weist das Robotersystem AMR ein erstes Sensorsystem 1 zur Erfassung von ersten Sensordaten SD1 und ein zweites Sensorsystem 2 zur Erfassung von zweiten Sensordaten SD2 auf. Die Sensordaten SD1,SD2 werden jeweils durch eine erste Auswerteeinheit A1 bzw. eine zweite Auswerteeinheit A2 ausgewertet, wobei die erste Auswerteeinheit A1 ausgestaltet ist, aus den ersten Sensordaten SD1 erste Lokalisierungsdaten P1 zu ermitteln und die zweite Auswerteeinheit A2 ist ausgestaltet, aus den zweiten Sensordaten SD2 zweite Lokalisierungsdaten P2 zu ermitteln.

Das erste Sensorsystem 1 und das zweite Sensorsystem 2 sind dabei zueinander diversitär ausgelegt. Die so diversitär ermittelten Lokalisierungsdaten P1,P2 werden einer Sicherheitseinrichtung 1oo2 zugeführt. Die Sicherheitseinrichtung 1oo2 ist ausgestaltet, die ersten Lokalisierungsdaten P1 und die zweiten Lokalisierungsdaten P2 in einem Vergleichsmittel 3 zu vergleichen und eine Plausibilitätsprüfung der Lokalisierungsdaten P1,P2 durchzuführen. Bei vorliegender Gleichheit und Plausibilität generiert die Sicherheitseinrichtung 1oo2 ein Freigabesignal OK und bei einer Abweichung der Lokalisierungsdaten P1,P2 voneinander bzw. einem nicht plausiblen Prüfergebnis wird ein erstes Sicherheitssignal S1 erzeugt.

Das Robotersystem AMR weist weiterhin eine Kontrolleinheit 4 auf, welche ausgestaltet ist, bei Vorliegen des ersten Sicherheitssignals S1 die Mittel zum selbstständigen Annähern und Agieren in ihren Funktionen einzuschränken oder abzuschalten, wobei eine Kopplungsüberwachungseinheit 5 vorhanden ist, in welcher Standortdaten PK des Ankopplungsbereiches 401 hinterlegt sind, dabei ist die Kopplungsüberwachungseinheit 5 weiterhin dazu ausgestaltet, zu prüfen, ob die Lokalisierungsdaten P1,P2 mit den Standortdaten PK des Ankopplungsbereiches 401 übereinstimmt und bei Übereinstimmung mittels einer Fallumschalteeinheit 6 von dem ersten Überwachungsmodus M1 in einen zweiten Überwachungsmodus M2 zu schalten, wobei die Überwachungseinheit 7 ausgestaltet ist, in dem zweiten Überwachungsmodus M2 ein zweites Überwachungsfeld F2 zu überwachen, welches einen Sicherheitsbereich SP des Produktionsmoduls 400 mit einschließt.

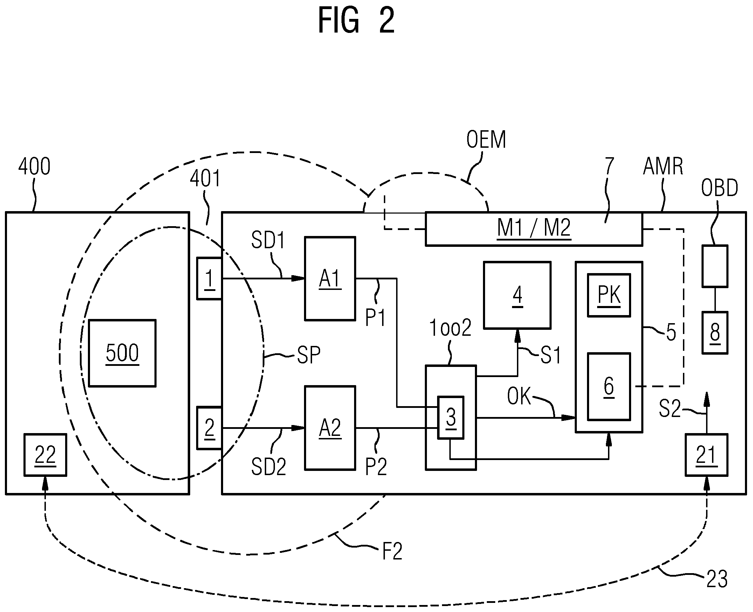

Gemäß FIG 2 ist das Robotersystem AMR in dem Ankopplungsbereich 401 des Produktionsmoduls 400 angekommen und verharrt dort.

Das Robotersystem AMR baut über eine erste Kommunikationseinheit 21 eine fehlersichere Kommunikationsverbindung 23 mit einer zweiten Kommunikationseinheit 22 des Produktionsmoduls 400 auf. Dabei ist zumindest die erste Kommunikationseinheit 22 ausgestaltet, zuvor eine funktional sichere eindeutige Verbindungsidentifizierung mit der zweiten Kommunikationseinheit 22 durch zuführen und bei einer erfolgreichen Identifizierung die Kommunikation aufrecht zu erhalten und ein zweites Sicherheitssignal S2 zu erzeugen, welches die fehlersichere Kommunikationsverbindung 23 bestätigt, wobei die Überwachungseinheit 7 weiterhin ausgestaltet ist, die Überwachung des Sicherheitsbereiches SP des Produktionsmoduls bei Vorliegen des zweiten Sicherheitssignals zu übernehmen.

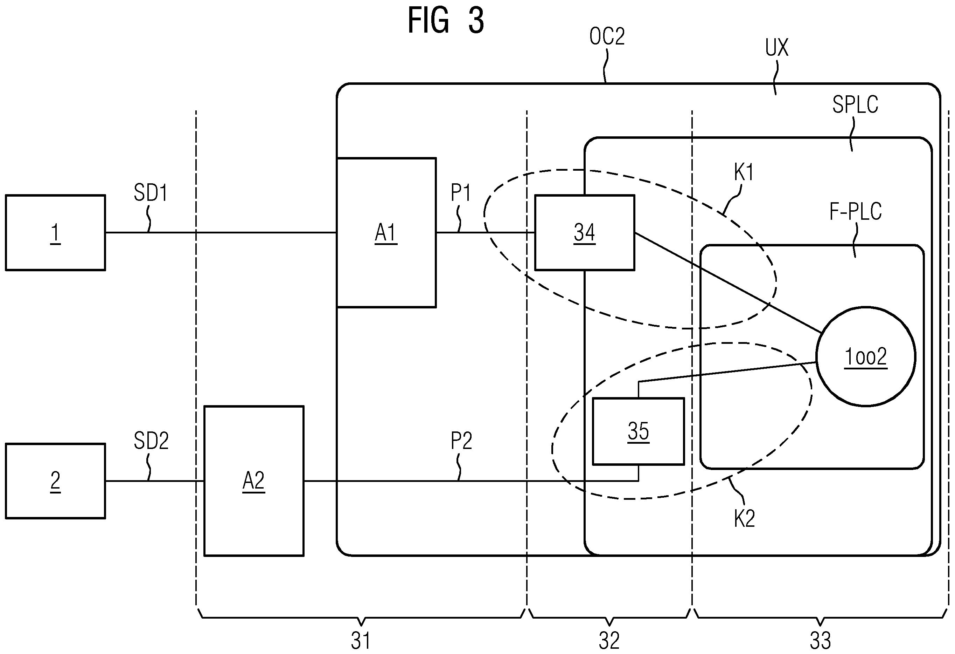

Die FIG 3 zeigt eine mögliche Ausführung einer Sicherheitseinrichtung 1oo2 mit den Auswerteeinheiten A1,A2 und den Sensorsystemen 1,2. In einer Rechnereinheit OC2, welche beispielsweise als ein Open Controller ausgestaltet ist, ist eine auf funktionale Sicherheit ausgelegte Steuerungs-Softwareumgebung SPLC eingebettet, welche wiederum innerhalb eines Wirtsbetriebssystems UX auf der Rechnereinheit OC2 ablauffähig ist. Die Sicherheitseinrichtung 1oo2 ist wiederum innerhalb einer fehlersicheren speicherprogrammierbaren Steuerung F-PLC als ein one out of two System integriert.

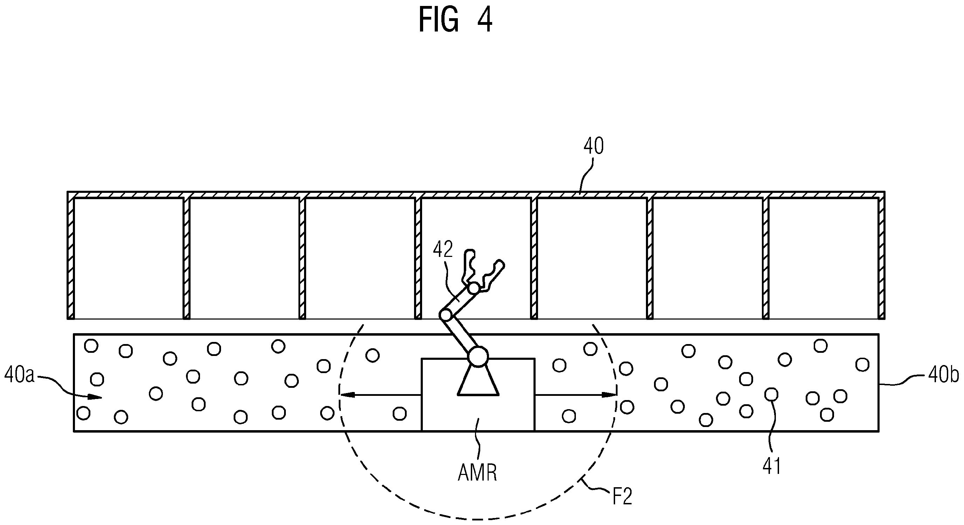

Das erste Sensorsystem 1 ist als ein Lasererfassungssystem ausgestaltet und generiert die ersten Sensordaten SD1. Das zweite Sensorsystem 2 ist als ein Kamerasystem ausgestaltet und generiert die zweiten Sensordaten SD2. In einem Rechnereinheit-Sensorsystemabschnitt 31 befinden sich die erste Auswerteeinheit A1 und die zweite Auswerteeinheit A2. Die erste Auswerteeinheit A1 umfasst eine Navigationssoftware, welche wiederum die ersten Positionsdaten P1 bereitstellt. Die zweite Auswerteeinheit A2 umfasst eine Bodenlokalisierungseinheit, welche über Bodenmerkmale 41 (siehe FIG 4) die zweiten Positionsdaten P2 bereitstellt. In einem Kommunikations-Abschnitt 32 ist ein erster Kommunikationsweg K1 zwischen der ersten Auswerteeinheit A1 und der Sicherheitseinrichtung 1oo2 und ein zweiter Kommunikationsweg K2 zwischen der zweiten Auswerteeinheit A2 und der Sicherheitseinrichtung 1oo2 dargestellt. Die Kommunikationswege K1,K2 sind diversitär zueinander ausgestaltet, welches man z.B. dadurch erreicht, dass im ersten Kommunikationsweg K1 die Daten über einen Shared-Memory-Bereich 34 an die Sicherheitseinrichtung 1oo2 weitergegeben werden und im zweiten Kommunikationsweg K2 die zweiten Positionsdaten P2 über ein Ethernet-UDP-Interface 35 an die Sicherheitseinrichtung 1oo2 weitergegeben werden.

In einem Vergleichsüberwachungseinheit 33 Abschnitt befindet sich die als Software realisierte fehlersichere speicherprogrammierbare Steuerung F-PLC mit der integrierten Sicherheitseinrichtung 1oo2.

Als Vorteil wird auch angesehen, dass die Posen bzw. die Lokalisierungsdaten P1,P2 von den beiden aufgezeigten Sensorsystemen 1,2 im Datentyp Integer in hundertstel Millimeter bzw. hundertstel Millirad ausgegeben werden, so dass die Überführung in einen F-Teil der auf Sicherheit ausgelegten speicherprogrammierbaren Steuerung F-PLC, in der nur Integer verwendet werden können, keine Konvertierung erfordert.

Die Posen, die aus den beiden Sensorsystemen 1,2 kommen, werden darüber hinaus noch mit einem Lebenszähler versehen, der bei dem Abgleich der Werte ebenfalls berücksichtigt werden muss, um sicherzustellen, dass die beiden Systeme noch aktiv sind und keine ungültigen Werte liefern.

Eine prinzipielle Berechnung des zu erreichenden SIL-Levels dieses gezeigten Sensorsystems kann beispielsweise mittels Kennzahlenzeichnung PFD (Probability of Failure on Demand) erfolgen. Im Folgenden sind die wichtigsten Schritte zur Herleitung des PFD in Anlehnung an die EN 61508 aufgelistet:
1. Ermittlung der mittleren Systemausfalldauer bei erkannten bzw. unerkannten Fehlern.
2. Berechnung der relativen Systemausfalldauern (Bezug auf Zeitintervall zwischen Wiederholungsprüfungen).
3. Berechnung der Wahrscheinlichkeiten für den Systemausfall.
4. Multiplikation der relativen Ausfalldauern (2.) mit der Wahrscheinlichkeit für den Systemausfall (3).
5. Addition der Teilergebnisse für erkannten und unerkannten Fehler.
6. Berücksichtigung von Fehlern mit gemeinsamer Ursache.

Diese Berechnungen müssten bei einer Zertifizierung durch beispielsweise ein TÜV erfolgen.

Mit der FIG 4 ist ein Ausführungsbeispiel eines Robotersystems AMR vor einem Regallager 40 aufgezeigt. Das Robotersystem AMR kann sich innerhalb eines Bereiches 40a, welcher zugleich einen Korridor 40b bildet sicher hin und her bewegen. Der Korridor 40b ist mit Bodenmerkmalen 41 versehen. Ein Greifarm 42 des Robotersystems AMR kann nun tätig werden und in das Regallager 40 sicher eingreifen. Hat das Robotersystem AMR mit dem Regallager 40 eine sichere Kommunikation aufgebaut, kann durch die permanente fehlersichere Lokalisierung längs des Regallagers 40 in dem Korridor 40b ein über die gesamte Länge des Regallagers 40 der Überwachungsfall abgeleitet werden. Der Überwachungsfall wäre hier dann nicht nur für eine Pose im Raum, sondern bei gleichbleibender Geometrie für einen längeren Abschnitt gültig, nämlich dem Korridor 40b.

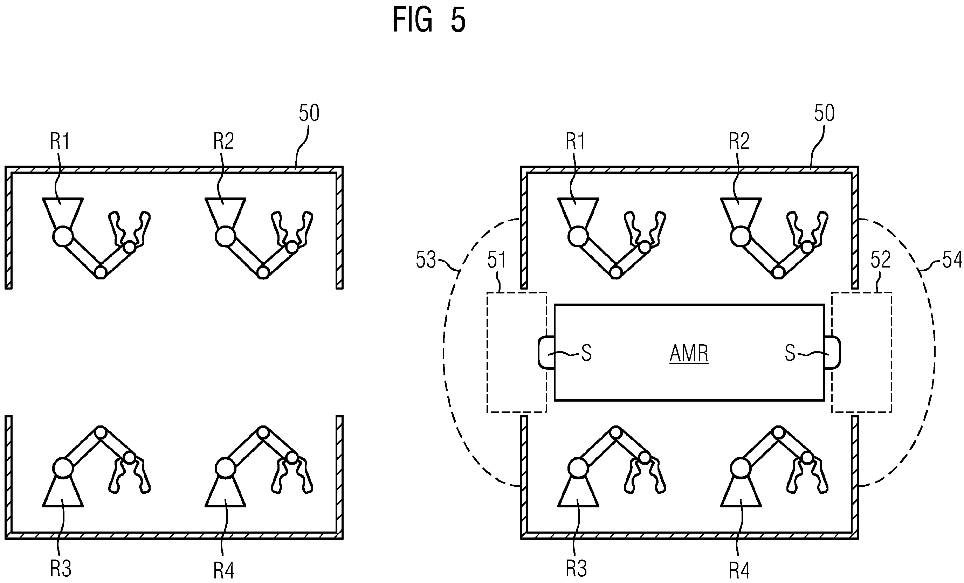

Die FIG 5 zeigt den Anwendungsfall, in welchem beispielsweise ein Robotersystem AMR Auto-Karosserieteile in eine Fertigungszelle 50 verbringt, wobei in der Fertigungszelle 50 die Karosserieteile bearbeitet werden können. Die Fertigungszelle 50 kann von dem Robotersystem AMR durchfahren werden, wobei das Robotersystem AMR in der Fertigungszelle 50 anhält und seinen Sicherheitsbereich aufspannt damit in der Fertigungszelle 50 die Produktionsschritte durchgeführt werden können.

Gemäß FIG 5 weist die Fertigungszelle 50 einen ersten Roboterarm R1, einen zweiten Roboterarm R2, einen dritten Roboterarm R3 und einen vierten Roboterarm R4 auf.

Ist das autonome mobile Robotersystem AMR in die Fertigungszelle 50 eingefahren, spannt es mit seinen Sensoren S ein erstes Sicherheitsfeld 51, ein zweites Sicherheitsfeld 52, ein drittes Sicherheitsfeld 53 und ein viertes Sicherheitsfeld 54 auf. Zusätzlich hat das Robotersystem AMR im Hintergrund die Kommunikation zu der Fertigungszelle 50 übernommen und da die fehlersichere Position des Robotersystems AMR in der Fertigungszelle 50 und das Aufspannen der Sicherheitsfelder 51,52,53,54 nun gewährleistet ist, können die Roboterarme R1,R2,R3,R4 in der Fertigungszelle 50 nun tätig werden, da gewährleistet ist, dass keine Person in der Fertigungszelle 50 ist oder unbemerkt eindringen kann.

Sobald ein Mensch sich der Fertigungszelle 50 und somit den Gefährdungsbereich nähert, wird er von den Sensoren S des Robotersystems AMR erkannt und dies einer fehlersicheren Steuerung der Fertigungszelle 50 gemeldet, die daraufhin alle Roboterarme R1,...,R4 auf eine sichere Geschwindigkeit reduziert. Hier ergibt sich das Einsparpotential für eine Zelle, denn für die Fertigungszelle 50 sind keine gesonderten Sensoren S notwendig, da die Überwachung die Sensoren S des Robotersystems AMR übernehmen.

## Patentansprüche

1. Autonomes mobiles Robotersystem (AMR) mit
einem ersten Sensorsystem (1) zur Erfassung von ersten Sensordaten (SD1),
einem zweiten Sensorsystem (2) zur Erfassung von zweiten Sensordaten (SD2), mit
einer ersten Auswerteeinheit (A1) ausgestaltet aus den ersten Sensordaten (SD1) erste Lokalisierungsdaten (P1) zu ermitteln, mit
einer zweiten Auswerteeinheit (A2) ausgestaltet aus den zweiten Sensordaten (SD2) zweite Lokalisierungsdaten (P2) zu ermitteln,
**dadurch gekennzeichnet, dass** das erste Sensorsystem (1) und das zweite Sensorsystem (2) diversitär zueinander ausgelegt sind und eine Sicherheitseinrichtung (1oo2) vorhanden ist,
welche ausgestaltet ist die ersten Lokalisierungsdaten (P1) und die zweiten Lokalisierungsdaten (P2) in einem Vergleichsmittel (3) zu vergleichen und eine Plausibilitätsprüfung der Lokalisierungsdaten (P1,P2) durchzuführen, und weiterhin ausgestaltet bei vorliegender Gleichheit und Plausibilität ein Freigabesignal (OK) bereitzustellen und bei einer Abweichung der Lokalisierungsdaten (P1,P2) voneinander bzw. einem nicht plausiblen Prüfergebnis ein erstes Sicherheitssignal (S1) zu erzeugen.

2. Robotersystem (AMR) nach Anspruch 1, wobei die Sicherheitseinrichtung (1oo2) als eine auf funktionale Sicherheit ausgelegte Steuerung (F-PLC) ausgestaltet ist, welche über einen ersten Kommunikationsweg (K1) mit der ersten Auswerteeinheit (A1) und über einen zweiten Kommunikationsweg (K2) mit der zweiten Auswerteeinheit (A2) verbunden ist, wobei die Kommunikationswege (K1,K2) diversitär zueinander ausgestaltet sind.

3. Robotersystem (AMR) nach einem der Ansprüche 1 oder 2, wobei die Sicherheitseinrichtung (1oo2) in eine auf funktionale Sicherheit ausgelegte Steuerungs-Softwareumgebung (SPLC) eingebettet ist, welche wiederum innerhalb eines Wirtsbetriebssystems (UX) auf einer Rechnereinheit (OC2) ablauffähig ist.

4. Robotersystem (AMR) nach einem der Ansprüche 1 bis 3, wobei die Überwachungseinheit (7) weiterhin ausgestaltet ist ein Eindringen des Objektes (O) in das erste Überwachungsfeld (F1) entweder mit Hilfe der ersten Sensordaten (SD1) des ersten Sensorsystems (1) oder mit einem der Überwachungseinheit (7) zugeordnetem Objekterkennungsmittel (OEM) zu erfassen.

5. Robotersystem (AMR) nach einem der Ansprüche 1 bis 4, weiterhin aufweisend eine Geschwindigkeitsregeleinheit (8) ausgestaltet die aktuellen Lokalisierungsdaten (P1,P2) mit den Ortsbeschreibungsdaten (OBD) eines vorgebbaren Bereichs (40a) und/oder eines vorgebbaren Korridors (40b) entlang einer geplanten Route zu vergleichen und für den Fall, dass der Vergleich ergibt, das der Bereich (40a) oder der Korridor (40b) verlassen wurde, die Geschwindigkeit zu reduzieren.

6. Autonomes mobiles Robotersystem (AMR) nach einem der Ansprüche 1 bis 5 mit Mitteln zum selbstständigen Anfahren an einen Ankopplungsbereich (401) eines Produktionsmoduls (400) und Mitteln zum Agieren mit dem Produktionsmodul (400) und/oder einem Produkt (500), mit einer Überwachungseinheit (7) ausgestaltet in einem ersten Überwachungsmodus (M1) ein um das Robotersystem (AMR) zumindest teilweise aufgespanntes erstes Überwachungsfeld (F1) auf ein Eindringen eines Objektes (O) zu überwachen,
**dadurch gekennzeichnet, dass** eine Kontrolleinheit (4) vorhanden ist,
welche ausgestaltet ist bei Vorliegen des ersten Sicherheitssignals (S1) die Mittel zum selbstständigen Annähern und Agieren in ihren Funktionen einzuschränken oder abzuschalten, wobei eine Kopplungsüberwachungseinheit (5) vorhanden ist, in welcher Standortdaten (PK) des Ankopplungsbereiches (401) hinterlegt sind, dabei ist die Kopplungsüberwachungseinheit (5) weiterhin dazu ausgestaltet, zu prüfen, ob die Lokalisierungsdaten (P1,P2) mit den Standortdaten (PK) des Ankopplungsbereiches (401) übereinstimmen und bei Übereinstimmung mittels einer Fallumschalteinheit (6) von dem ersten Überwachungsmodus (M1) in einen zweiten Überwachungsmodus (M2) zu schalten, wobei die Überwachungseinheit (7) ausgestaltet ist in dem zweiten Überwachungsmodus (M2) ein zweites Überwachungsfeld (F2) zu überwachen, welches einen Sicherheitsbereich (SP) des Produktionsmoduls (400) mit einschließt.

7. Robotersystem (AMR) nach Anspruch 6, weiterhin aufweisend eine erste Kommunikationseinheit (21) ausgestaltet eine fehlersichere Kommunikationsverbindung (23) mit einer zweiten Kommunikationseinheit (22) des Produktionsmoduls (400) aufzubauen, wobei weiterhin zumindest die erste Kommunikationseinheit (21) ausgestaltet ist zuvor eine funktional sichere eindeutige Verbindungsidentifizierung mit der zweiten Kommunikationseinheit (22) durchzuführen und bei einer erfolgreichen Identifizierung die Kommunikation aufrechtzuerhalten und ein zweites Sicherheitssignal (S2) zu erzeugen, welches die fehlersichere Kommunikationsverbindung (23) bestätigt, wobei die Überwachungseinheit (7) weiterhin ausgestaltet ist die Überwachung des Sicherheitsbereich (SP) des Produktionsmoduls (400) bei Vorliegen des zweiten Sicherheitssignals (S2) zu übernehmen.

8. Verfahren zum Betrieb eines autonomen mobilen Robotersystems (AMR, wobei mit einem ersten Sensorsystem (1) erste Sensordaten (SD1) und mit einem zweiten Sensorsystem (2) zweite Sensordaten (SD2) erfasst werden, wobei aus den ersten Sensordaten (SD1) mittels einer ersten Auswerteeinheit (A1) erste Lokalisierungsdaten (P1) und aus den zweiten Sensordaten (SD2) mittels einer zweiten Auswerteeinheit (A2) zweite Lokalisierungsdaten (P2) generiert werden,
**dadurch gekennzeichnet, dass** das
erste Sensorsystem (1) und das zweite Sensorsystem (2) diversitär zueinander betrieben werden und mittels einer Sicherheitseinrichtung (1oo2) die ersten Lokalisierungsdaten (P1) und die zweiten Lokalisierungsdaten (P2) in einem Vergleichsmittel (3) verglichen und auf Plausibilität geprüft werden, wobei bei vorliegender Gleichheit und Plausibilität ein Freigabesignal (OK) bereitgestellt wird und bei einer Abweichung der Lokalisierungsdaten (P1,P2) voneinander bzw. einem nicht plausiblen Prüfergebnis wird ein erstes Sicherheitssignal (S1) erzeugt.

9. Verfahren nach Anspruch 8, wobei die Sicherheitseinrichtung (1oo2) als eine auf funktionale Sicherheit ausgelegte Steuerung (F-PLC) betrieben wird, wobei über einen ersten Kommunikationsweg (K1) mit der ersten Auswerteeinheit (A1) und über einen zweiten Kommunikationsweg (K2) mit der zweiten Auswerteeinheit (A2) kommuniziert wird, wobei die Kommunikationswege (K1,K2) diversitär betrieben werden.

10. Verfahren nach Anspruch 8 oder 9, zum Betrieb des autonomen mobilen Robotersystems (AMR) zur sicheren Interaktion zwischen dem Robotersystem (AMR) und einem Produktionsmodul (400) in einem Ankopplungsbereich (401) oder Wechselwirkungsbereich (402), wobei in einem ersten Überwachungsmodus (M1) ein um das Robotersystem (AMR) zumindest teilweise aufgespanntes erstes Überwachungsfeld (F1) auf ein Eindringen eines Objektes (O) überwacht wird, wobei mittels einer Kontrolleinheit (4) bei Vorliegen des ersten Sicherheitssignals (S1) der Betrieb und/oder die Interaktion eingeschränkt oder abgeschaltet wird.

11. Verfahren nach Anspruch 8, wobei mittels einer Kopplungsüberwachungseinheit (5) geprüft wird, ob die Lokalisierungsdaten (P1,P2) mit Standortdaten (PK) eines Ankopplungsbereiches (401) oder eines Wechselwirkungsbereiches (402) übereinstimmen und bei Übereinstimmung wird mittels einer Fallumschalteinheit (6) von dem ersten Überwachungsmodus (M1) in einen zweiten Überwachungsmodus (M2) geschaltet wird, in welchem ein zweites Überwachungsfeld (F2) überwacht wird, welches einen Sicherheitsbereich (SP) des Produktionsmoduls (400) mit einschließt.

12. Verfahren nach Anspruch 10 oder 11, wobei das Eindringen des Objektes (O) in das erste Überwachungsfeld (F1) entweder mit Hilfe der ersten Sensordaten (SD1) des ersten Sensorsystems (1) oder mit separaten Objekterkennungsmittel (OEM) erfasst wird.

13. Verfahren nach Anspruch 11 oder 12, wobei das Robotersystem (AMR) über eine erste Kommunikationseinheit (21) eine fehlersichere Kommunikationsverbindung (23) mit einer zweiten Kommunikationseinheit (22) des Produktionsmoduls (400) aufbaut, wobei zuvor eine funktional sichere eindeutige Verbindungsidentifizierung zwischen den Kommunikationseinheiten (21,22) durchgeführt wird und bei einer erfolgreichen Identifizierung die Kommunikation aufrechtgehalten und ein zweites Sicherheitssignal (S2) erzeugt wird, welches die fehlersichere Kommunikationsverbindung (23) bestätigt, wobei daraufhin die Überwachungseinheit (7) die Überwachung des Sicherheitsbereichs (SP) des Produktionsmoduls (400) bei Vorliegen des zweiten Sicherheitssignals (S2) übernimmt.
